# EUROPEAN PATENT APPLICATION

(11) **EP 2 618 493 A1**
(43) Date of publication of application: **24.07.2013**
(21) Application number: 10857312.2
(22) Date of filing: 15.09.2010
(51) Int. Cl.: H04B 1/40, G06F 3/041

(54) **SCHEDULE DISPLAY METHOD AND DEVICE IN MOBILE COMMUNICATION TERMINAL**

(71) Applicant: LG Electronics Inc., Yeongdeungpo-gu Seoul 150-721 (KR)
(72) Inventor: LEE, Seungwon, Seoul 135-270 (KR); CHOI, Jinwook, Seoul 137-845 (KR); BAEK, Seungcheon, Seoul 151-050 (KR); LEE, Jungsu, Seoul 137-785 (KR)
(74) Representative: Cabinet Plasseraud
(86) International application number: PCT/KR2010/006308
(87) International publication number: WO 2012/036327

(57) **Abstract**

A terminal includes: a user input unit configured to input schedule information and to perform a management function of the inputted schedule information; a sensing unit configured to measure status information of the terminal; a controller configured to provide control to change the form of an object on a scheduler on the basis of the status information of the terminal measured by the sensing unit or the inputted schedule information; and a display unit configured to display schedule information or an object under the control of the controller.

## Description

### BACKGROUND OF THE INVENTION

### 1. Field of the Invention

The present invention relates to a method and apparatus for displaying a schedule in a mobile communication terminal and, more particularly, to a method and apparatus for displaying schedule information in consideration of a user situation.

### 2. Description of the Related Art

In general, as mobile communication terminals are widely spreading, people increasingly manage their schedules by using a mobile communication terminal, rather than an electronic clock or an electronic scheduler.

However, currently, a scheduler displayed on a mobile communication terminal is a small screen with which it is not easy to input or correct a schedule, making it difficult for a user to check an overall schedule flow. Thus, the necessity of a scheduler that can show schedule information to its maximum level within a limited screen of the mobile communication terminal and facilitate usability is emerging.

### SUMMARY OF THE INVENTION

Therefore, in order to address the above matters, the various features described herein have been conceived.

An aspect of the present invention provides a method and apparatus for displaying a schedule of a mobile communication terminal capable of recognizing a user situation by using a sensor or schedule information and displaying an icon corresponding to a user's situation in a scheduler to thus allow the user to easily check his schedule.

According to an aspect of the present invention, there is provided a terminal including: a user input unit configured to input schedule information and to perform a management function of the inputted schedule information; a sensing unit configured to measure status information of the terminal; a controller configured to provide control to change the form of an object on a scheduler on the basis of the status information of the terminal measured by the sensing unit or inputted schedule information; and a display unit configured to display schedule information or an object under the control of the controller.

The terminal may further include: a memory configured to store the inputted schedule information and schedule information changed by the management function.

The status information may be measured by using at least one of an acceleration sensor, a geomagnetic sensor, a gyro sensor, a gravity sensor, and a GPS receiver.

The schedule information may include at least one of detailed schedule content, a schedule title, a schedule date, and time information.

The scheduler may be an object displayed on the display unit by an application for displaying and managing a user's schedule information, and may be displayed in any one of a circular analog clock form an a table form.

The object may be positioned at a time line corresponding to a current time, and may be an icon indicating a user's situation.

The object may move in one of a clockwise direction or a counterclockwise direction according to a touch motion.

The user input unit may be a touch screen on which an event occurs according to a touch input.

The function of managing schedule information may perform any one of deleting or changing the inputted schedule information, or adding of new schedule information.

The controller may control the schedule information management function on the basis of motion information according to a touch input.

The motion information may be a touch motion dragging from one area of a scheduler in one of the clockwise direction or the counterclockwise direction.

The controller may provide control to display schedule information corresponding from an area in which the touch motion starts to an area in which the touch motion is terminated.

The motion information may be a touch motion dragging from one area of a scheduler to an area other than the scheduler.

The controller may provide control to delete schedule information corresponding to an area in which the touch motion starts.

The motion information may be a multi-touch motion according to which the distance between the different areas on the scheduler is reduced.

When the distance between the two different areas on the scheduler is smaller than a threshold value according to the multi-touch motion, the controller may provide control to display one of weekly, monthly, yearly schedule information.

The schedule information may be discriminated or differentiated according to its importance and thusly displayed on the display unit.

The controller may provide control to extract a schedule title corresponding to the inputted schedule information and display the extracted schedule title on the scheduler.

The controller may compare information regarding a user's situation and schedule information stored in the memory, and if schedule information corresponding to the information regarding the user's situation is included in the memory, the controller may control the display unit to display the scheduler.

The information regarding the user's information may be information including at least one of time information, location information, and information measured by the sensing unit.

According to another aspect of the present invention, there is provided a method for displaying a schedule, including: storing inputted schedule information and schedule information which has been changed by a function of managing the inputted schedule information; measuring status information of a terminal; providing control to change the form of an object on a scheduler on the basis of the measured status information or the inputted schedule information; and displaying the schedule information or the object.

According to exemplary embodiments of the present invention, a schedule can be provided on the screen of a mobile communication terminal such that the user can easily view it, and the function allowing the user to easily manage schedule content is perform, thus increasing the usability of the scheduler.

The foregoing and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic block diagram of a mobile terminal according to an exemplary embodiment of the present invention;
FIG. 2 is an overview of a screen display illustrating inputted schedule information according to an exemplary embodiment of the present invention;
FIG. 3 is an overview of a screen display illustrating a change in the shape of an object according to a user's situation on the basis of information measured by a sensing unit;
FIG. 4 is an overview of a screen display illustrating the change in the shape of an object according to a user's situation on the basis of inputted schedule information;
FIG. 5 is an overview of a screen display illustrating a function of managing schedule information according to a first exemplary embodiment of the present invention;
FIG. 6 is an overview of a screen display illustrating a function of displaying weekly schedule information according to a second exemplary embodiment of the present invention;
FIG. 7 is an overview of a screen display illustrating a function of displaying monthly schedule information according to the second exemplary embodiment of the present invention;
FIG. 8 is an overview of a screen display illustrating a function of managing schedule information according to a first exemplary embodiment of the present invention;
FIG. 9 is an overview of a screen display illustrating a function of managing schedule information according to a fourth exemplary embodiment of the present invention;
FIG. 10 is an overview of a screen display illustrating a function of managing schedule information according to a fifth exemplary embodiment of the present invention;
FIG. 11 is an overview of a screen display illustrating a function of managing schedule information according to a sixth exemplary embodiment of the present invention; and
FIG. 12 is an overview of a screen display illustrating a function of managing schedule information according to a seventh exemplary embodiment of the present invention.

### DETAILED DESCRIPTION OF THE INVENTION

The mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself.

The mobile terminal described in the present invention may include mobile phones, smart phones, notebook computers, digital broadcast receivers, PDAs (Personal Digital Assistants), PMPs (Portable Multimedia Player), navigation devices, and the like. It would be understood by a person in the art that the configuration according to the embodiments of the present invention can be also applicable to the fixed types of terminals such as digital TVs, desk top computers, or the like, except for any elements especially configured for a mobile purpose.

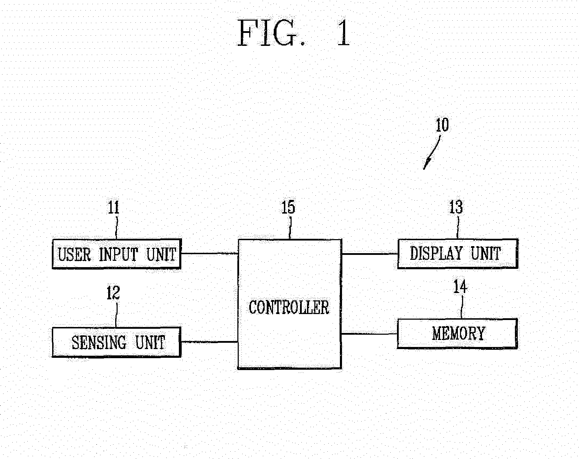

FIG. 1 is a block diagram of a mobile terminal according to an embodiment of the present invention.

The mobile terminal 10 may include a use input unit 11, a sensing unit 12, a display unit 13, a memory 14, and a controller 15. FIG. 1 shows the mobile terminal as having various components, but it should be understood that implementing all of the illustrated components is not a requirement. Greater or fewer components may alternatively be implemented.

The elements of the mobile terminal will be described in detail as follows.

A wireless communication unit may include one or more modules allowing for radio communication between the mobile terminal 10 and a wireless communication system or between the mobile terminal 10 and a network in which the mobile terminal 10 is located. For example, the wireless communication unit may include a broadcast receiving module, a mobile communication module, a wireless Internet module, a short-range communication module, and a location information module.

The location information module 115 is a module for acquiring a location (or position) of the mobile terminal. A typical example of the location information module is a GPS (Global Positioning System). Here, the GPS module may be included in the sensing unit to detect a current location state of the mobile terminal. A current status of the mobile terminal or information regarding a user's situation may be known through the GPS module.

For example, information regarding a current time, information regarding an area in which the mobile terminal is currently located, information regarding whether or not the mobile terminal is currently stopped or on the move, and the like, may be known through the GPS module. In addition, the information regarding whether or not the mobile terminal is on the move can be specifically measured as to whether or not the user is moving in a vehicle, a train, or an airplane, or whether or not the user is walking, through an acceleration sensor.

The user input unit 11 inputs schedule information according to a user request, and inputs information generated to manage the inputted schedule information.

The management function of the schedule information includes inputting additional schedule information, deleting the inputted schedule information or changing the inputted schedule information. Namely, the management function of the schedule information refers to editing the inputted schedule information.

The user input unit may have various types, and in the present exemplary embodiment, a touch screen (touch sensor) by which information generated through a touch input is inputted to the controller will now be described as an example of the user input unit.

The touch screen may be configured to convert pressure applied to a particular portion of the display unit 13 or a change in the capacitance or the like generated at a particular portion of the display unit 13 into an electrical input signal. The touch screen may be configured to detect the pressure when a touch is applied, as well as the touched position and area.

When there is a touch input with respect to the touch screen, a corresponding signal (signals) are transmitted to a touch controller. The touch controller processes the signals and transmits corresponding data to the controller 15. Accordingly, the controller 15 may recognize which portion of the display unit 13 has been touched.

In case where the touch screen is a capacitance type, proximity of the pointer is detected by a change in electric field according to the proximity of the pointer. In this case, the touch screen (touch sensor) may be classified as a proximity sensor.

In the following description, for the sake of brevity, recognition of the pointer positioned to be close to the touch screen, rather than being in contact with the touch screen, will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor, a proximity touch and a proximity touch pattern (e.g., a proximity touch distance, a proximity touch direction, a proximity touch speed, a proximity touch time, a proximity touch position, a proximity touch movement state, or the like) can be detected, and information corresponding to the detected proximity touch motion and the proximity touch pattern can be outputted to the touch screen.

The schedule information includes at least one of detailed schedule content, a schedule title, a schedule date, and time information inputted through the user input unit, namely, the touch screen.

Also, the schedule information displayed on the scheduler may be discriminated according to its importance. For example, schedule information may be discriminated by differentiating color, letter size, and the like. Namely, the color of schedule information displayed on the scheduler may be differentiated according to priority, thus according to the color of the schedule information is distinguished the importance of the schedule information.

The scheduler refers to an object displayed by an application for displaying and managing a user's schedule information. The scheduler may have a shape of a diagram or have a form of a schedule management table. Also, the schedule may have a form of an analog clock. The form of the diagram of the scheduler may have various shapes, and hereinafter, a case in which the diagram of the scheduler has a circular shape and the scheduler has the form of an analog clock will be described as an example.

The sensing unit 12 detects a current status of the mobile terminal 10 such as an opened or closed state of the mobile terminal 10, a location of the mobile terminal 10, the presence or absence of user contact with the mobile terminal 10 (i.e., touch inputs), the orientation of the mobile terminal 10, an acceleration or deceleration movement of the mobile terminal 10, etc., and generates commands or signals for controlling the operation of the mobile terminal 10. The sensing unit may include various sensors to detect the current status of the mobile terminal 10. For example, the sensing unit may include an acceleration sensor, a geomagnetic sensor, a gyro sensor, a gravity sensor, and the like.

The acceleration sensor measures a change in the location of the terminal by calculating the movement of the terminal. The geomagnetic sensor indicates an azimuth by detecting the magnetism of the earth, and accordingly, the orientation of the terminal can be measured. The geomagnetic sensor provides an elaborate location-based service by combining location data received from a GPS and azimuth data, as well as indicating an electronic compass, an azimuth. The gyro sensor measures an angular velocity of the mobile terminal.

The display unit 13 may display (output) information processed in the mobile terminal 10. For example, when the mobile terminal 10 is in a phone call mode, the display unit 13 may display a User Interface (UI) or a Graphic User Interface (GUI) associated with a call or other communication (such as text messaging, multimedia file downloading, etc.). When the mobile terminal 10 is in a video call mode or image capturing mode, the display unit 13 may display a captured image and/or received image, a UI or GUI.

When the display unit 13 and a sensor (referred to as a 'touch sensor', hereinafter) for detecting a touch motion are overlaid in a layered manner to form a touch screen, the display unit 13 may function as both an input device and an output device. The touch sensor may have a form of a touch film, a touch sheet, a touch pad, a touch screen, and the like.

The memory 14 may store software programs used for the processing and controlling operations performed by the controller 15, or may temporarily store data (e.g., a phonebook, messages, still images, video, etc.) that are inputted or outputted. The memory 14 may store data regarding various patterns of vibrations and audio signals outputted when a touch is inputted to the touch screen.

The memory 14 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 10 may be operated in relation to a web storage device that performs the storage function of the memory 14 over the Internet.

The interface unit serves as an interface with every external device connected with the mobile terminal 10. For example, the external devices may transmit data to an external device, receives and transmits power to each element of the mobile terminal 10, or transmits internal data of the mobile terminal 100 to an external device. For example, the interface unit may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various types of information for authenticating the authority of using the mobile terminal 10 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 10 via a port.

When the mobile terminal 10is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 15 typically controls the general operations of the mobile terminal. For example, the controller 180 performs controlling and processing associated with voice calls, data communications, video calls, and the like.

The controller checks a user's situation on the basis of information measured by the sensing unit or schedule information inputted to the scheduler, and provides control to change the form of an object displayed on the display unit according to the user's situation. The object is positioned at a timeline on the scheduler, and in particular, the object is positioned at a time line corresponding to a current time. Here, the time line refers to graduations corresponding to a time indication of 1 H to 24H or 1 H to 12H. For example, the time line may be time graduations marked at an outer edge of an analog clock. Here, the information regarding the user's situation may be information including at least one of time, a location, and information measured by the sensing unit.

The object is an icon whose shape is changed according to the user's situation. For example, when the user is driving a vehicle, the object is displayed by an icon indicating a vehicle. Also, when the user is doing exercise, the object is displayed as an icon in the shape of a person who does exercise. When the user is in a meeting, the object is displayed as an icon in the shape indicating that the user is in a meeting.

The object is positioned at a current time as a default, and moves clockwise or counter-clockwise according to a touch motion.

The controller compares the information regarding the user's situation and schedule information stored in the memory, and when there is schedule information corresponding to the information regarding the user's situation, the controller controls the display unit to display the scheduler. Here, the information regarding the user's situation may be information including at least one of information regarding a time, an area, and information measured by the sensing unit.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 15 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 14 and executed by the controller 15.

Exemplary embodiments related to a control method that can be implemented in the terminal configured as described above will now be described with reference to the accompanying drawings. The exemplary embodiments to be described may be used alone or may be combined to be used. Also, the exemplary embodiments to be described may be combined with the foregoing user interface (UI) so as to be used.

### Function of displaying object form on scheduler

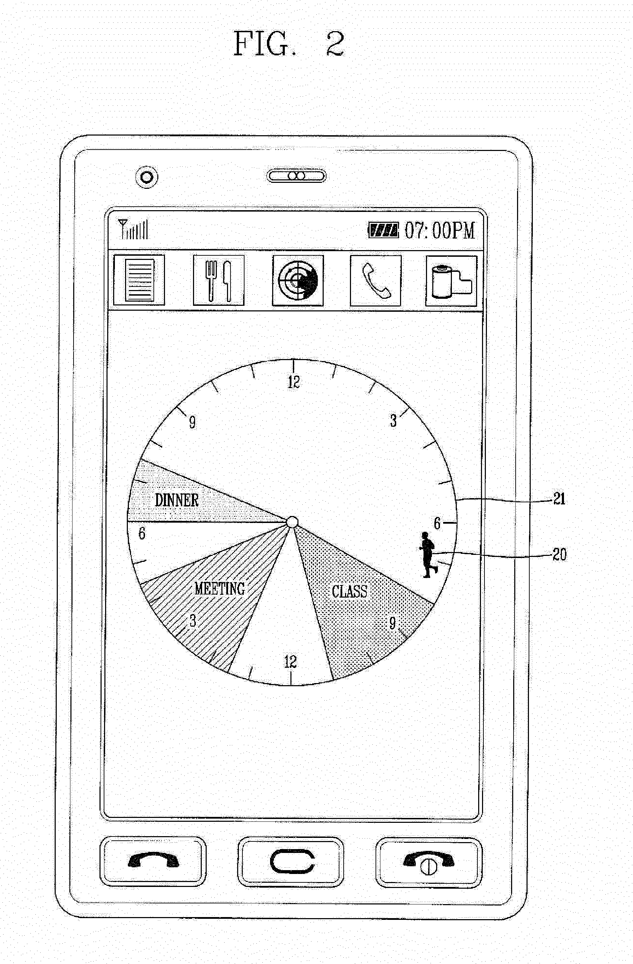

FIG. 2 is an overview of a screen display illustrating inputted schedule information according to an exemplary embodiment of the present invention.

With reference to FIG. 2, the display unit 13 of the mobile terminal displays a scheduler 21 having a circular shape, schedule information inputted through the user input unit, and an object 20 positioned at a current time. Here, the schedule information may include at least one of detailed schedule content, a schedule title, a schedule date, and time information. As shown in FIG. 2, the object may be an icon in the shape of a person.

The scheduler 21 may have various shapes such as a shape of a table, or the like, and hereinafter, a circular scheduler will be described as an example.

The circular scheduler 21 may be displayed on a basic main screen image or displayed under the control of the controller when the mobile terminal is turned on. For example, the circular scheduler may be displayed on a locked screen of the display unit. Or, the circular scheduler may be displayed when there is schedule information corresponding to a current date and time according to the results obtained by comparing the current date and time with schedule information stored in the memory under the control of the controller.

Alternatively, the circular scheduler 21 may be displayed when there is schedule information corresponding to current user situation information according to the results obtained by comparing the user situation information and the schedule information stored in the memory under the control of the controller. Here, the user situation information may be information including at least one of time, an area, and information measured by the sensing unit. The sensing unit measures the location, posture, direction information, and the like, of the mobile terminal. In this case, the sensing unit may include at least one of a GPS receiver, a gravity sensor, a gyro sensor, an acceleration sensor, and a geomagnetic sensor.

As shown in FIG. 2, the circular scheduler 21 is displayed in the form of an analog clock on the display unit. The analog clock may be displayed in the form of 1 H to 24H or 1 H to 12H. The circular scheduler may include an object set as a default at a current time. The object moves in a clockwise direction or counter-clockwise direction according to a touch motion.

The object 20 corresponds to an icon having a particular shape according to a user's situation. For example, when the user is running, the object may be an icon in the shape of a running person. When the user is sleeping, the object may be an icon in the shape of a sleeping person.

Also, only a title of an inputted schedule is displayed on the circular scheduler. In this case, as the title of the schedule, a particular keyword such as a time, an area, a person's name, and the like, among the schedule information inputted through the user input unit under the control of the controller may be extracted and displayed.

The schedule information may be discriminately displayed according to importance. For example, the importance of the schedule information may be discriminated by color, a character (letter) size, and the like. The color according to the importance and the font of the character size may be previously set by the user.

### Display of an object form according to information measured by sensing unit

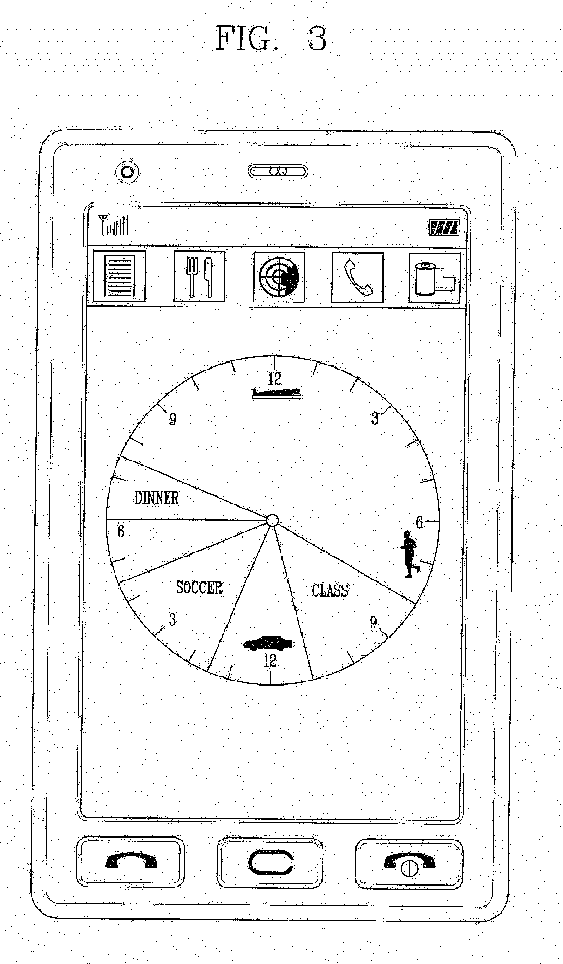

FIG. 3 is an overview of a screen display illustrating a change in the shape of an object according to a user's situation on the basis of information measured by a sensing unit.

First, the controller provides control to display an object on the scheduler in the form corresponding to a current user's state by using information measured by the sensing unit. Here, the sensing unit may include various sensors such as a GPS receiver, a gyro sensor, an acceleration sensor, a geomagnetic sensor, a gravity sensor, and the like. For example, the when a user state measured by the acceleration sensor and the GPS receiver is a state in which the user is doing exercise, the object is displayed as an icon in the shape of a person doing exercise.

When the user state measured by the sensing unit is a state in which the user is running, the object is displayed as an icon in the shape of a running person. When the user state is a state in which the user is walking, the object is displayed as an icon in the shape of a walking person. When information measured by the GPS receiver and the acceleration sensor is that the user is on the move by vehicle, the object is displayed as an icon in the shape of a vehicle.

When the user state is a situation in which the user is getting on a plane, the object is displayed as an icon in the shape of an airplane. When the user state measured through time and location information is that a current location is a house and a current time is a sleeping time, the object is displayed as an icon in the shape of a sleeping person.

### Display of an object form according to schedule information inputted to scheduler

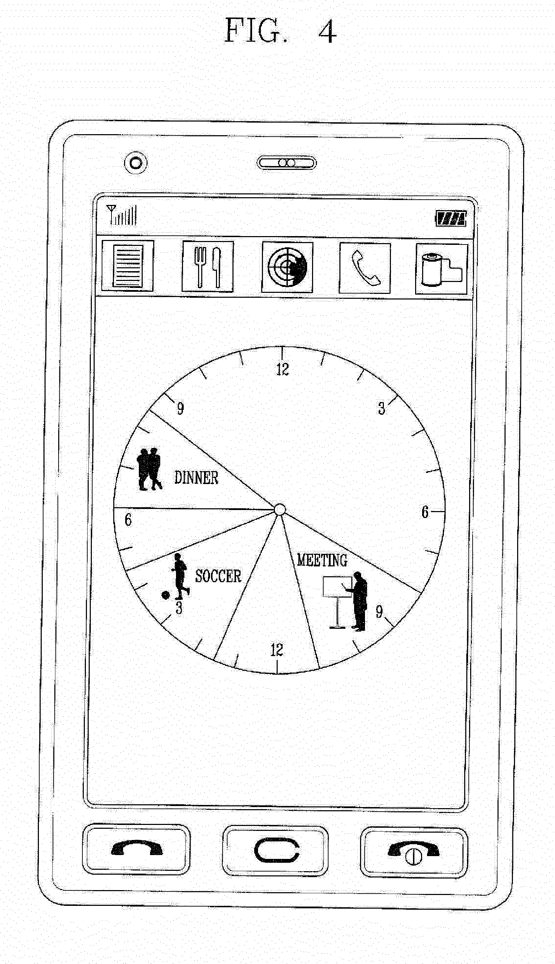

FIG. 4 is an overview of a screen display illustrating the change in the shape of an object according to a user's situation on the basis of inputted schedule information.

With reference to FIG. 4, an object on a circular scheduler is positioned as a default at a current time displayed on the circular scheduler.

First, the controller analyzes schedule information inputted through the user input unit and provides control to display an object on the scheduler in the form corresponding to the schedule information. Here, when the object is positioned at a start point of schedule information, the object is displayed in the shape of an icon corresponding to the schedule information corresponding to the start point.

When the object is positioned at the last point of the corresponding schedule information, the object is displayed as an icon having a shape of a person set as a default. Namely, the object is displayed as an icon in the shape corresponding to the schedule information during a time period in which the schedule information is set. For example, when content of the schedule information is a presentation in a conference, the object is displayed as an icon in the shape corresponding to the schedule information, namely, in the shape of a person giving a presentation at a point in time when the schedule information starts.

When content of the schedule information is related to a football game, the object is displayed as an icon in the shape of playing football at a point in time when the schedule information starts. When the object is positioned at the last point in time of the corresponding schedule information, the object is displayed as the icon in the shape of a person initially set.

### Display of schedule information management function according to touch input

First, the controller provides control to perform a function of managing schedule information on the scheduler on the basis of motion information according to a touch input applied to the touch screen.

Here, the function of managing schedule information (or a schedule information management function) refers to performing at least one of inputting additional schedule information to the scheduler, and deleting inputted schedule information, changing inputted schedule information, and adding the inputted schedule information. Namely, the schedule information management function refers to performing a function of editing the inputted schedule information. Also, the motion information according to the touch input refers to a touch motion in a clockwise direction or counterclockwise direction, starting from one point within the scheduler and ending in a different one area within the scheduler. Also, the motion information refers to a touch motion from one area within the scheduler in which the schedule information is displayed to one area outside the scheduler. Also, the motion information refers to refers to a multi-touch motion according to which the distance between two different points within the scheduler is reduced.

The operation of performing the schedule information management function according to exemplary embodiments will now be described.

### First embodiment

A first embodiment provides a function of displaying schedule information according to a rotation of an object on a scheduler.

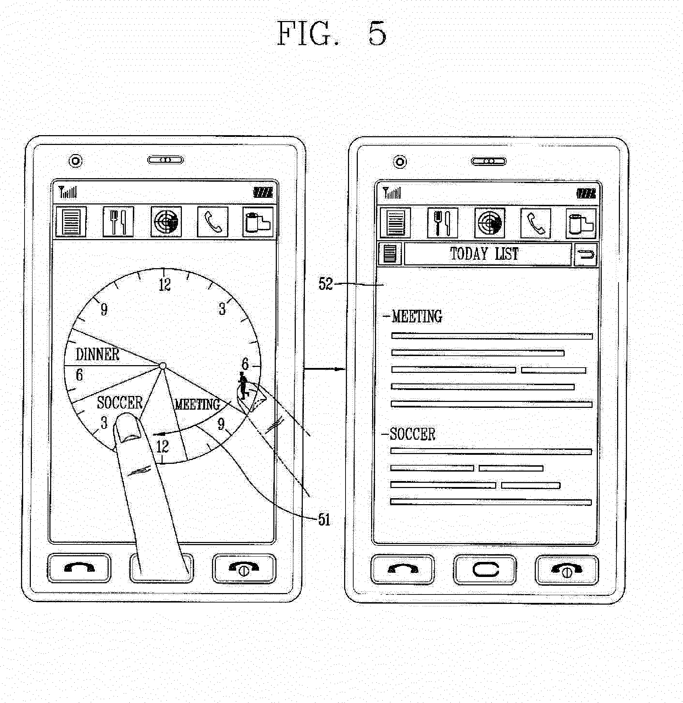

FIG. 5 is an overview of a screen display illustrating a function of managing schedule information according to a first exemplary embodiment of the present invention.

First, when the controller detects a touch motion with respect to a rotation of an object in a clockwise direction or a counter-clockwise direction, the controller provides control to display schedule information corresponding to a start point of the object to schedule information corresponding to a final point of the object. Namely, when the object rotates by a certain area or distance in a clockwise direction or counter-clockwise direction at a current position (51), the controller provides control to display schedule information corresponding to the rotated area or distance (52). As shown in FIG. 5, when there is a touch rotational motion in a clockwise direction starting from schedule information corresponding to a group meeting to schedule information corresponding to an appointment for dinner, the controller displays the schedule information, starting from the schedule information corresponding to the group meeting to the schedule information corresponding to the appointment for dinner. In this case, the schedule information is displayed at a portion outside the scheduler so as to be discriminated from the scheduler displayed on the display unit.

### Second embodiment

A second embodiment provides a function of displaying weekly, monthly, and yearly schedule information according to the reduction in size of a scheduler.

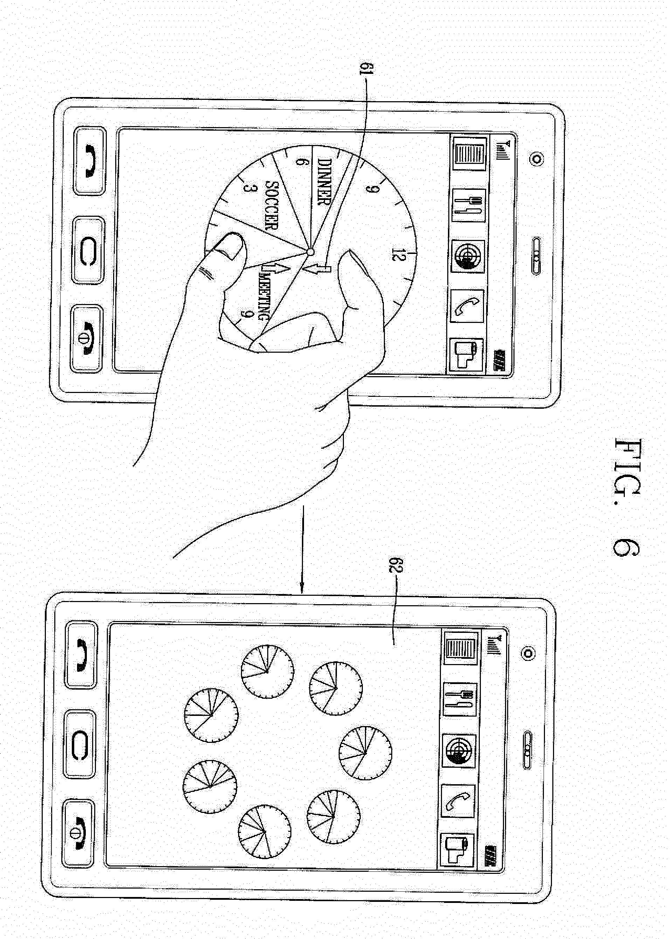

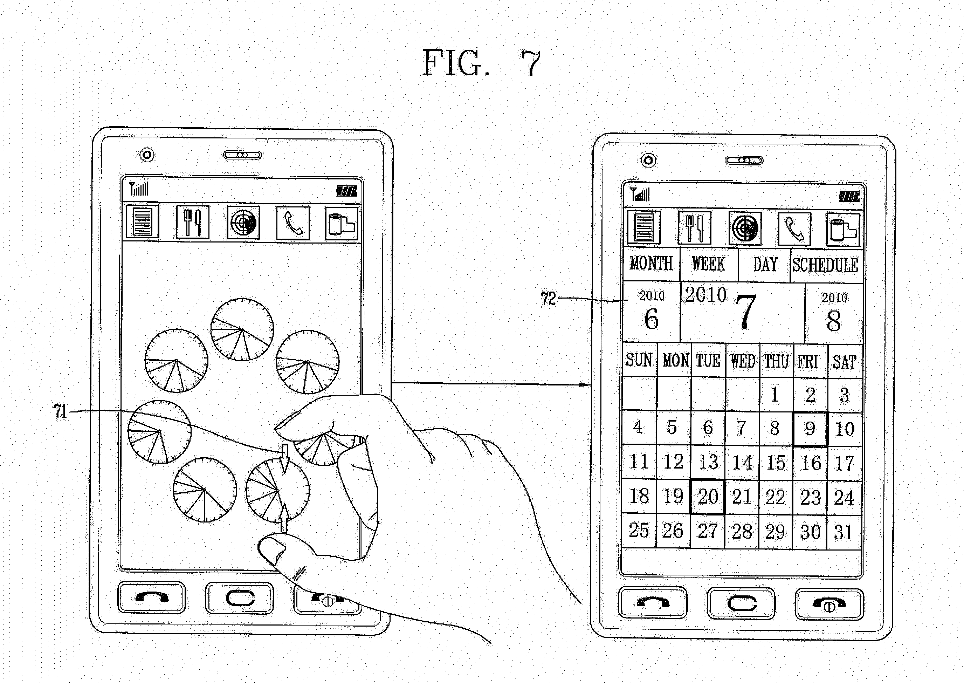

FIGS. 6 and 7 show schedule information management functions according to a second exemplary embodiment of the present invention. Specifically, FIG. 6 is an overview of a screen display illustrating a function of displaying weekly schedule information according to the second exemplary embodiment of the present invention, and FIG. 7 is an overview of a screen display illustrating a function of displaying monthly schedule information according to the second exemplary embodiment of the present invention.

First, when the size of a scheduler displayed on the display unit is reduced to below a threshold value, the controller provides control to display certain schedule information corresponding to the reduced size. Here, the certain schedule information refers to weekly, monthly, or yearly schedule information. Namely, when a multi-touch motion in which two difference points within the scheduler is reduced is received, the controller provides control to display the weekly, monthly, or yearly schedule information according to the size of the scheduler. For example, when the size of the scheduler is a first threshold value or smaller, the controller displays the weekly schedule information, when the size of the scheduler is a second threshold value or smaller, the controller displays the monthly schedule information, and when the size of the scheduler is a third threshold value or smaller, the controller displays yearly schedule information. Here, the first to third threshold values may be pre-set values or values which can be adjusted by the user. The sizes of the threshold values may be reduced in the order of the first threshold value, the second threshold value, and the third threshold value.

Here, the scheduler in which the weekly schedule information is displayed may have a circular shape, and a scheduler by the days corresponding to the week is displayed. Namely, when the size of the scheduler is reduced to be smaller than the first threshold value (61), seven schedulers are displayed on the display unit (62). When the size of the scheduler is smaller than the second threshold value (71), the monthly schedule information is displayed. In this case, the scheduler displaying the monthly schedule information may be displayed in the form of a table (72).

### Third embodiment

A third embodiment provides a function of deleting schedule information from the scheduler.

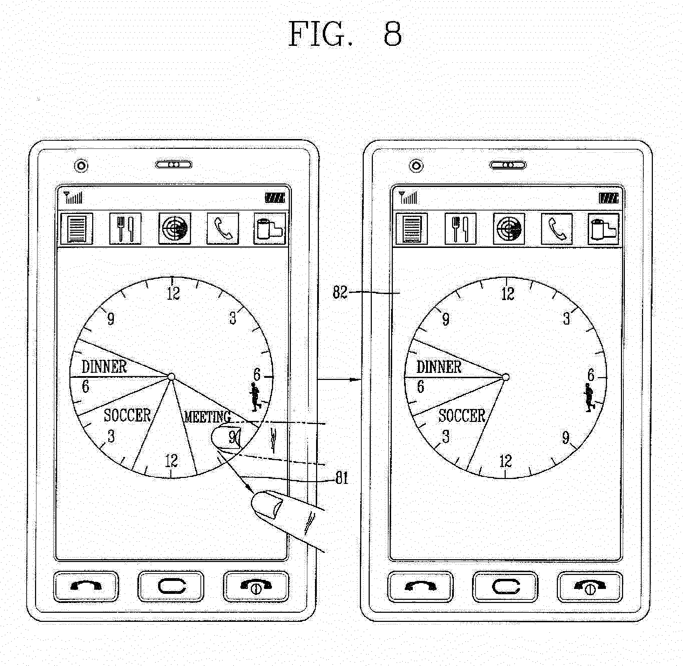

FIG. 8 is an overview of a screen display illustrating a function of managing schedule information according to a first exemplary embodiment of the present invention.

First, when the controller detects a touch motion from one area within a scheduler in which schedule information is displayed to an area outside the scheduler, the controller provides control to delete schedule information corresponding to the one area within the scheduler.

Namely, when there is a touch input with respect to certain schedule information on the scheduler from the user and the touched schedule information is dragged to an area outside the scheduler (81), the touched schedule information is deleted (82). For example, when schedule information regarding a meeting on the scheduler is touched and then dragged to outside the scheduler, the schedule information regarding the meeting is deleted from the scheduler.

### Fourth embodiment

A fourth embodiment provides a function of editing or changing schedule information on a scheduler.

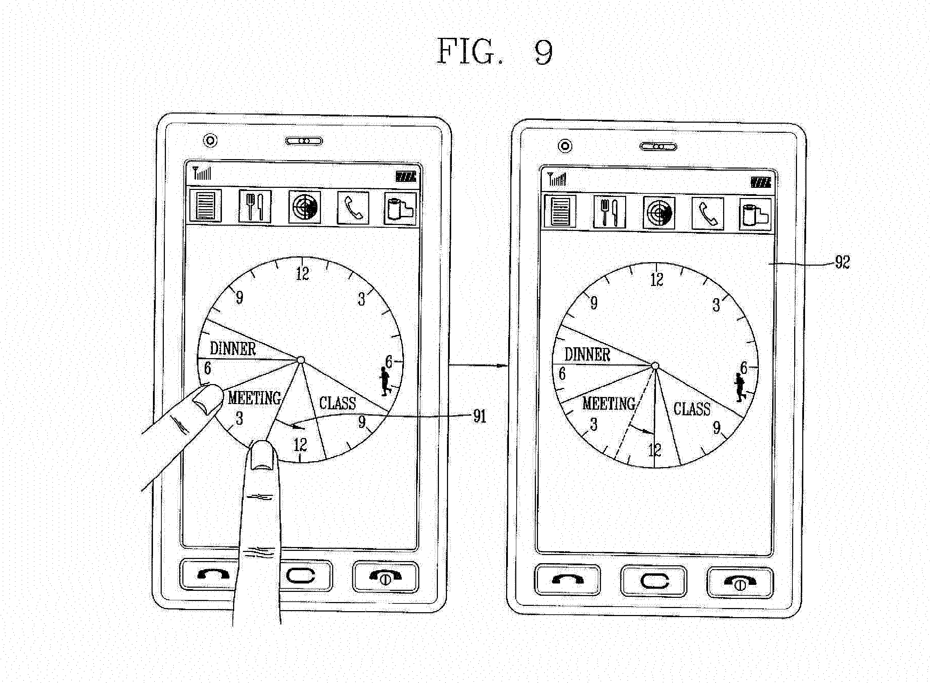

FIG. 9 is an overview of a screen display illustrating a function of managing schedule information according to a fourth exemplary embodiment of the present invention.

First, when a multi-touch input with respect to a start point and an end point of schedule information displayed on a scheduler is generated and a multi-touch motion with respect to magnification or reduction of the two points is performed (91), the controller provides control to reset the corresponding schedule information to the point of the presence of the multi-touch motion and provides control to edit schedule information corresponding to the point according to the multi-touch motion (92). Here, the editing is one of correcting, adding and changing of detailed schedule content of the schedule information or a schedule title. Also, when the multi-touch motion is performed, the controller provides control to display a pop-up window displaying detailed schedule content for allowing for a change in inputted schedule information. Also, the controller provides control to update the area of the schedule information to the area magnified or reduced by the two points.

### Fifth embodiment

A fifth embodiment provides a function of adding new schedule information to a scheduler.

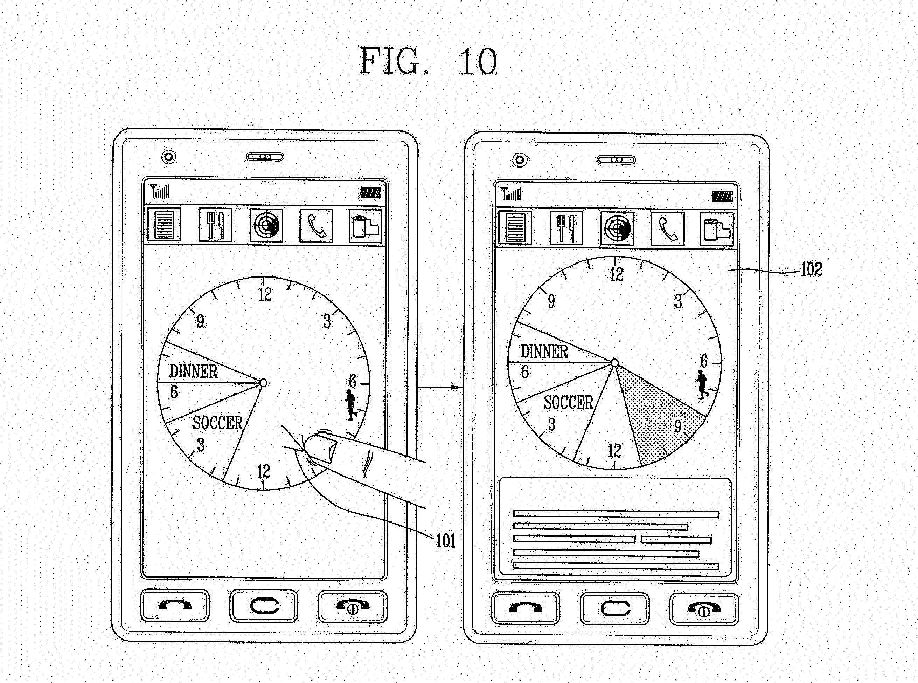

FIG. 10 is an overview of a screen display illustrating a function of managing schedule information according to a fifth exemplary embodiment of the present invention.

First, when there is a touch input to a certain area in which schedule information is not displayed on the scheduler (101), the controller provides control to display a schedule information input window for adding new schedule information (102). The input window may be displayed in a pop-up manner or may be displayed under the scheduler.

### Sixth embodiment

A sixth embodiment provides a function of displaying detailed information of schedule information displayed on a scheduler.

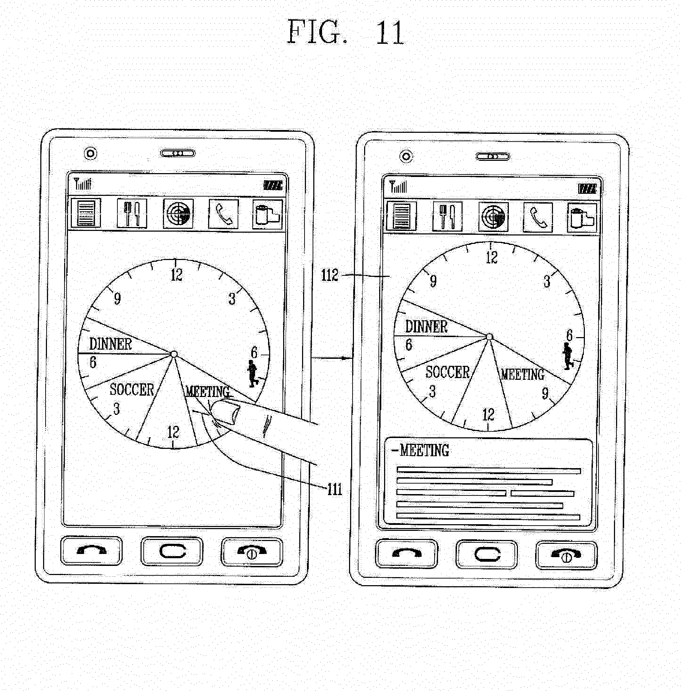

FIG. 11 is an overview of a screen display illustrating a function of managing schedule information according to a sixth exemplary embodiment of the present invention.

First, when a touch input to a certain area in which schedule information is displayed on a scheduler (111), the controller provides control to display detailed schedule content of schedule information corresponding to the area (112). The detailed schedule content may be displayed at a lower end of the scheduler displayed on the display unit or in a pop-up manner.

### Seventh embodiment

A seventh embodiment provides a function of magnifying a scheduler and schedule information on the scheduler.

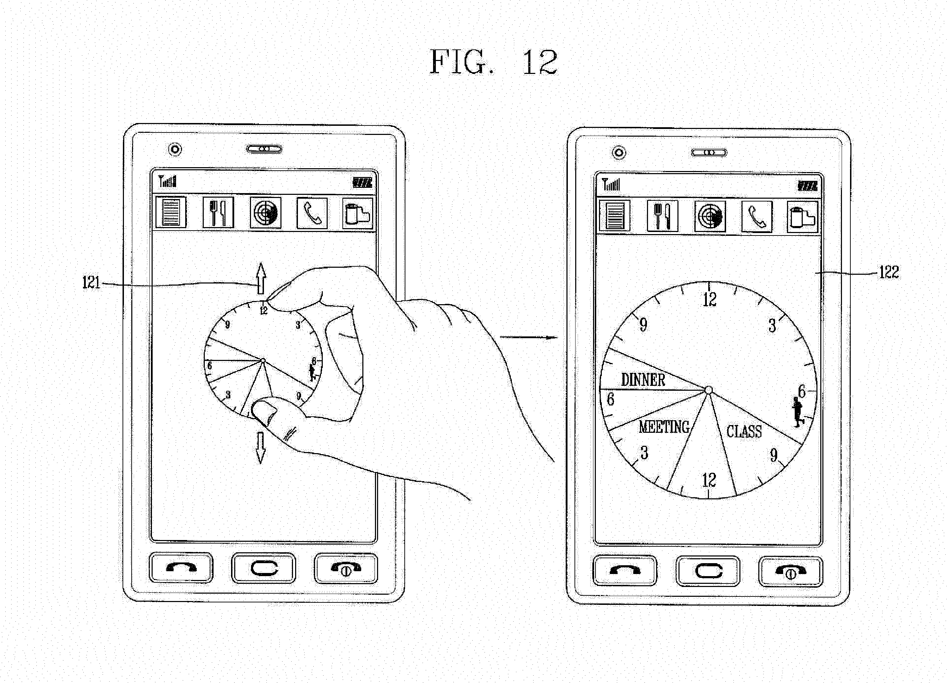

FIG. 12 is an overview of a screen display illustrating a function of managing schedule information according to a seventh exemplary embodiment of the present invention.

First, when a multi-touch motion for increasing the distance between two difference areas within a scheduler is generated (121), the controller provides control to magnify the size of the scheduler displayed on the display unit (122). In this case, the magnified size of the scheduler according to the multi-touch motion does not exceed the size of the display unit of the mobile terminal. When the size of the scheduler is magnified according to the multi-touch motion to exceed the size of the display unit, only titles of schedules are listed up on the display unit in the order starting from inputted schedule information having the highest importance. Also, the size of the scheduler is magnified at the same rate in every direction on the basis of the center of the scheduler.

As the present invention may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A terminal comprising:
a user input unit configured to input schedule information and to perform a management function of the inputted schedule information;
a sensing unit configured to measure status information of the terminal;
a controller configured to provide control to change the form of an object on a scheduler on the basis of the status information of the terminal measured by the sensing unit or the inputted schedule information; and
a display unit configured to display schedule information or an object under the control of the controller.

2. The terminal of claim 1, further comprising:
a memory configured to store the inputted schedule information and schedule information changed by the management function.

3. The terminal of claim 1, wherein the status information is measured by using at least one of an acceleration sensor, a geomagnetic sensor, a gyro sensor, a gravity sensor, and a GPS receiver.

4. The terminal of claim 1, wherein the schedule information comprises at least one of detailed schedule content, a schedule title, a schedule date, and time information.

5. The terminal of claim 1, wherein the scheduler is an object displayed on the display unit by an application for displaying and managing a user's schedule information, and is a circular analog clock form or a table form.

6. The terminal of claim 1, wherein the object is positioned at a time line corresponding to a current time, and is an icon indicating a user's situation.

7. The terminal of claim 1, wherein the object moves in a clockwise direction or a counter-clockwise direction according to a touch motion.

8. The terminal of claim 1, wherein the user input unit is a touch screen on which an event occurs according to a touch input.

9. The terminal of claim 1, wherein the function of managing the schedule information is any one of deleting the inputted schedule information, changing the inputted schedule information, or adding of new schedule information.

10. The terminal of claim 1, wherein the controller provides control to be performed the management function of the schedule information on the basis of motion information of a touch input.

11. The terminal of claim 10, wherein the motion information is a touch motion dragging from one area of on the scheduler to other area of on the scheduler in a clockwise direction or a counter-clockwise direction.

12. The terminal of claim 10, wherein the controller provides control to display schedule information corresponding from an area in which the touch motion starts to an area in which the touch motion is terminated.

13. The terminal of claim 10, wherein the motion information is a touch motion dragging from one area of on the scheduler to an area other than the scheduler.

14. The terminal of claim 13, wherein the controller provides control to delete schedule information corresponding to an area in which the touch motion starts.

15. The terminal of claim 10, wherein the motion information is a multi-touch motionwhich the distance between two different areas on the scheduler is reduced.

16. The terminal of claim 15, wherein when the distance between the two different areas on the scheduler is smaller than a threshold value by the multi-touch motion, the controller provides control to display any one of weekly, monthly, or yearly schedule information.

17. The terminal of claim 1, wherein the schedule information is discriminately displayed according to the importance of the schedule information on the display unit.

18. The terminal of claim 1, wherein the controller provides control to extract a schedule title corresponding to the inputted schedule information and display the extracted schedule title on the scheduler.

19. The terminal of claim 1, wherein the controller compares information regarding a user's situation and schedule information stored in the memory, and if schedule information corresponding to the information regarding the user's situation is included in the memory, the controller controls the display unit to display the scheduler.

20. The terminal of claim 19, wherein the information regarding the user's information is information including at least one of time information, location information, and information measured by the sensing unit.

21. A method for displaying a schedule, the method comprising:
storing schedule information inputted from a user input unit and schedule information changed by a management function of the inputted schedule information;
measuring status information of a terminal;
providing control to change the form of an object on a scheduler on the basis of the measured status information or the inputted schedule information; and
displaying the schedule information or the object.

22. The method of claim 21, wherein the schedule information comprises at least one of detailed schedule content, a schedule title, a schedule date, and time information.

23. The method of claim 21, wherein the object is positioned at a time line corresponding to a current time, and displayed as an icon indicating a user's situation .
